# EUROPEAN PATENT APPLICATION

(11) **EP 3 991 943 A1**
(43) Date of publication of application: **04.05.2022**
(21) Application number: 20204498.8
(22) Date of filing: 28.10.2020
(51) Int. Cl.: B29C 51/00, B29C 51/42, B29K 67/00, B29K 105/24

(54) **MOLDING METHOD OF CRYSTALLINE PLASTICS**

(71) Applicant: Iscard Investment Co., Ltd., Taichung City 407 (TW)
(72) Inventor: Hung, Mu Sung, 407 Taichung City (TW)
(74) Representative: Lang, Christian

(57) **Abstract**

A molding method of crystalline plastics includes: providing a raw material; executing a thermoforming step; executing a cooling crystallization step; and executing a cooling and demolding step to form a crystalline plastic product, and a staged cooling technology is used to achieve the effect of simultaneously performing the cooling crystallization step and the cooling and demolding step in a mold. The molding method does not require an expensive cooling system, nor require an additional crystallizer, and the method can improve the process yield, lower the required equipment and labor costs and expenses, and reduce the total process time significantly.

## Description

### BACKGROUND

### Technical Field

The present disclosure relates to the technical field of molding crystalline plastics and more particularly to a molding method of crystalline plastics, and the crystalline plastics can be molded in one shot to achieve the effects of lowering the equipment and labor costs of molding, accelerating the molding process, and improving the yield of molding.

### Description of Related Art

In general, containers are made of a crystalline material such as polythene (PE), polypropylene (PP), polyethylene terephthalate (PET), polyphenylene sulphide (PS), etc., wherein PET with the advantages of excellent gas barrier property, pressure resistance, creep resistance, impact resistance, transparency, and surface gloss, the features of oderlessness, fragrance retention, and the compliance with the safety of food hygiene. In the meantime, PET comes with a beautiful appearance and features easy molding, so that it is widely used in food containers such as PET bottles.

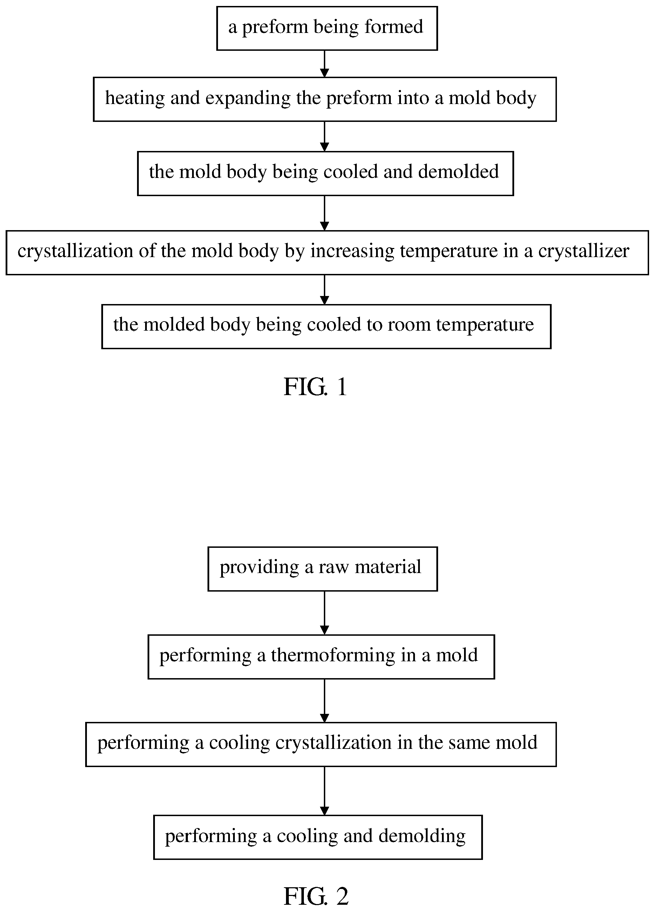

PET is a high molecular weight polymer, and the most important feature resides on its molecular weight which is the number of uniform molecules in a PET molecular link. The greater the number of molecular links, the better the physical property of the PET. The PET is a crystalline resin with a specific gravity of approximately 1.4, and a melting point of 245°C, a molding temperature within a range of 290°C∼315°C. In FIG. 1, when the PET is molded in a mold, a preform is formed first, and then a heating and thermomolding process is performed to heat the preform to a molding temperature (such as 290°C∼315°C) and expand the preform inside the mold into a mold body of a predetermined size by a blow molding technology, and then an ice water system installed in the mold is used to perform a cooling and demolding process to cool the mold to room temperature (such as 20°C∼30°C) and facilitate the demolding of the molded body, and then a crystallization of increasing temperature is to be performed. That is the molded body is put into a crystallizer after the demolding of the molded body, and then the temperature is increased to a crystallization temperature (such as 150°C∼170°C) to crystallize and mold the molded body that has not been crystallized yet. This is also for improving the strength of the molded body. Then the molded body is cooled to room temperature again after the crystallization to form a complete carrier.

In a conventional method of crystalline plastic molding, the mold requires the use of the ice water system for cooling to decrease the temperature to room temperature quickly in order to perform the demolding process and the crystallizer to increase the temperature in order to perform the crystallization and molding. Since the mold design of the ice water system incurs high level of difficulty and construction cost, and also requires building an additional crystallizer, and thus not occupying much space only, but also increasing the total equipment cost greatly. In addition, the process time is increased because it is necessary to increase and decrease the temperature repeatedly, and it may even produce defectives, so that the surface of the finished product of the molded body is whiten to destroy the beautiful appearance of the product.

In other words, the conventional crystalline plastic molding requires the repeated heating and cooling process and the demolding during the manufacturing process, so that there are issues of high equipment and labor costs, long manufacturing time, and high defective rate, and how to overcome the aforementioned problems of injection molding and crystallization is a main subject for related manufacturers as well as the present disclosure.

In view of the aforementioned problems of the conventional crystalline plastics, the discloser of the present disclosure based on years of experience in the related industry to conduct extensive research and experiment according to the technical development requirements in recent years, and finally developed a molding method of crystalline plastics to overcome the drawback and inconvenience of the high equipment and labor costs and the long manufacturing time caused by the repeated heating and cooling processes.

### SUMMARY

Therefore, it is the primary objective of the present disclosure to provide a molding method of crystalline plastics capable of simplifying the processing procedure, shortening the total manufacturing time, and improving the molding yield effectively.

A secondary objective of the present disclosure is to disclose a molding method of crystalline plastics capable of reducing the equipment installation cost and further saving the equipment space and labor.

To achieve the aforementioned and other objectives, the present disclosure discloses a molding method of crystalline plastics, and the method comprises the steps of:
providing a raw material;
performing a thermoforming step that heats the raw material to a molding temperature and forms a product in a mold;
performing a cooling crystallization step that cools the same mold to a crystallization temperature after molding to crystallize and shape the product that still has not been crystallized yet; and
performing a cooling and demolding step that further cools the same mold to room temperature after the cooling crystallization of the product, so as to facilitate demolding after molding.

By the aforementioned technical measure, the molding method of crystalline plastics of the present disclosure uses a staged cooling technology to achieve the effects of cooling crystallization and cooling demolding, so that this method does not require an expensive cooling system or an additional crystallizer, and the method can improve the process yield, lower the required equipment and labor costs and expenses, and reduce the total process time significantly to increase the added values and economic benefits.

The present disclosure achieves the aforementioned objectives and effects by the following technical measures:

The raw material is a PET preform with a thermoforming temperature of 290°C∼315°C and a crystallization temperature of 120°C∼220°C, and the crystallization temperature is maintained for 1∼10 minutes.

To make it easier for the examiner to understand the structure, and overall operation of this invention, the specification accompanied by the drawings is described as follows, and persons having ordinary skills in the art can implement this disclosure accordingly.

### BRIEF DESCRIPTION OF THE DRAWING

FIG. 1 is a flow chart of a conventional molding process of cystralline plastics; and
FIG. 2 is a flow chart of a molding method of crystalline plastics of the present disclosure.

### DESCRIPTION OF THE EMBODIMENTS

In the description and drawings of this disclosure of a molding method of crystalline plastics in accordance with an exemplary example, the terms "front and rear", "left and right", "top and bottom", "upper part and lower part", and "horizontal and vertical" are provided for reference and used to describe and illustrate the present disclosure only, but not intended for limiting the scope of the present disclosure or limiting any position, space or direction of the components. It is noteworthy that the dimensions specified in the drawings and specification can be changed according to the design requirement of the exemplary examples of the present disclosure without departing from the scope of the claims of this disclosure.

With reference to FIG. 2 for a method of crystalline plastics in accordance with the present disclosure molding, the method comprises: providing a raw material; executing a thermoforming step; executing a cooling crystallization step; executing a cooling and demolding step to form a crystalline plastic product.

The detailed specification of the present disclosure is in accordance with FIG. 2. The molding method of PET bottles is the main embodiment. The molding method of PET bottles comprises:
providing a raw material such as a perform being molded beforehand;
performing a thermoforming step that heats the preform to a molding temperature (such as 290°C∼315°C) and uses a bottle blowing technology to expand the preform inside the same mold into a bottle body of a predetermined size;
performing a cooling crystallization step that cools the same mold to a crystallization temperature (such as 120°C∼220°C) by a temperature controller installed in the mold after the preform is blown and molded into a bottle body and maintains the crystallization temperature for 1∼10 minutes, so as to crystallize and shape the bottle body that has not been crystallized yet; and
performing a cooling and demolding step that further cools the same mold to room temperature (such as 20°C∼30°C) after the cooling crystallization of the bottle body, so as to facilitate demolding the molded bottle body to produce a complete bottle body.

From the description above, the molding method of crystalline plastics of the present disclosure uses a staged cooling technology to achieve the effects of cooling crystallization and cooling and demolding. The molding method does not require any expensive cooling system or additional crystallizer to lower the equipment cost, and the method can simplify the manufacturing process to save labor and process time, while improving the process yield, performance, efficiency and product quality, saving spaces, improving the raw material, finished goods and capital turnover rates, and increasing profitability and competitiveness significantly. This method surely provides economic benefits for industrial applications.

In summation of the description above, the present disclosure is an innovative invention, not just solving the problems of the prior art only, but also making significant improvements, and the invention is novel, inventive, and in compliance with patent application requirements, and thus is duly filed for patent application.

## Claims

1. A molding method of crystalline plastics, comprising:
providing a raw material;
performing a thermoforming step that heats the raw material to a molding temperature and forms a product in a mold;
performing a cooling crystallization step that cools the same mold to a crystallization temperature after molding to crystallize and shape the product still has not been crystallized yet; and
performing a cooling and demolding step that further cools the same mold to room temperature after the cooling crystallization of the product, so as to facilitate demolding after molding.

2. The molding method of crystalline plastics as claimed in claim 1, wherein the raw material is a PET preform with the molding temperature of 290°C∼315°C and the crystallization temperature of 120°C∼220°C, and the crystallization temperature is maintained for 1∼10 minutes.
